Europäisches Patentamt

**European Patent Office**

Office européen des brevets

(11) Numéro de publication: **0 100 715**

**A1**

(12) **DEMANDE DE BREVET EUROPEEN**

(21) Numéro de dépôt: **83401512.5**

(22) Date de dépôt: **22.07.83**

(51) Int. Cl.³: **H 05 B 3/14**
**G 01 P 13/02, B 64 D 15/12**

(30) Priorité: **03.08.82 FR 8213576**

(43) Date de publication de la demande:
**15.02.84 Bulletin 84/7**

(84) Etats contractants désignés:
**DE FR GB IT SE**

(71) Demandeur: **THOMSON-CSF**
**173, Boulevard Haussmann**
**F-75379 Paris Cedex 08(FR)**

(72) Inventeur: **Vialatte, Claude**
**THOMSON-CSF SCPI 173, bld Haussmann**
**F-75379 Paris Cedex 08(FR)**

(72) Inventeur: **Gauthier, Jean-Louis**
**THOMSON-CSF SCPI 173, bld Haussmann**
**F-75379 Paris Cedex 08(FR)**

(72) Inventeur: **Cantagrel, Michel**
**THOMSON-CSF SCPI 173, bld Haussmann**
**F-75379 Paris Cedex 08(FR)**

(74) Mandataire: **Trocellier, Roger**
**THOMSON-CSF SCPI 173, Bld Haussmann**
**F-75379 Paris Cedex 08(FR)**

(54) **Dispositif de dégivrage utilisable sur un capteur d'incidence aérodynamique.**

(57) Le dispositif de dégivrage utilise au moins une cérami-que à coefficient de température positif, dite CTP, placée entre deux électrodes pour recevoir un courant électrique d'une alimentation annexe. Le dispositif est destiné à des pièces exposées à basse prérature et y constituer l'essentiel des parties exposées, notamment les surfaces givrantes. Le point de curie est choisi assez bas, de préférence au-dessous de 70°.

FIG_3

1

## DISPOSITIF DE DEGIVRAGE UTILISABLE SUR
## UN CAPTEUR D'INCIDENCE AERODYNAMIQUE

La présente invention se rapporte au dégivrage de pièces pour préserver un bon fonctionnement. Ce problème se pose notamment dans le domaine aéronautique où certains éléments, tels des capteurs d'incidence ou autres, sont au moins partiellement placés à l'extérieur du fuselage et ce faisant, soumis en vol à des filets d'air à basse température.

De manière plus précise, l'invention s'applique à des dispositifs exposés au moins en partie dans une ambiante à basse température et qui sont équipés d'un dispositif de réchauffage pour assurer automatiquement le dégivrage des surfaces exposées, le réchauffage étant produit par circulation d'un courant électrique dans la résistance présentée par le dispositif de réchauffage.

L'invention va être exposée plus particulièrement dans le cadre d'une application et à un capteur d'incidence qui ne doit pas cependant être considéré comme limitative, ainsi que l'on pourra s'en rendre compte aisément.

Les sondes d'incidence sont des équipements avioniques embarqués, destinés à mesurer l'incidence locale d'un aéronef en vol, c'est-à-dire l'angle que fait la projection (sur le plan de symétrie de l'avion) de la direction d'écoulement des filets d'air locaux avec l'axe longitudinal de l'avion.

Ces sondes sont conçues de manières diverses. L'une d'elles consiste à utiliser une palette fuselée extérieure au fuselage de l'avion, jouant un rôle de girouette qui s'oriente automatiquement dans les filets d'air, et dont la rotation autour d'un axe-avion fixe est relevée par un ou plusieurs capteurs angulaires (codeurs optiques, inductifs, potentiomètres ...).

Les caractéristiques de tels capteurs d'incidence dépendent étroitement des performances aérodynamiques de la girouette qui constitue l'élément sensible en ce sens. Il convient donc que, quelles que soient les conditions de vol (grand froid, brouillard en altitude, ...), la masse et la géométrie de la girouette ne varient pas, c'est-à-dire que celle-ci ne se charge pas de givre ou de glace. Il est par suite nécessaire de prévoir un dispositif de réchauffage de la girouette, suffisamment performant pour éviter la formation de glaçons ou de givre.

Une solution connue pour produire le réchauffage consiste à surmouler la girouette conçue en alliage léger, sur une résistance chauffante. Mais, outre la difficulté technologique de réalisation, cette option présente deux inconvénients :

- une nécessité de régulation, soit à l'aide d'un thermostat, soit par l'utilisation de résistances dites autorégulantes, fragiles et coûteuses ;

- mauvaise répartition de l'énergie calorifique fournie. En effet, l'élément chauffant ayant évidemment une certaine épaisseur, ne peut être très proche du bord d'attaque de la girouette dont la forme est un dièdre très aigu ; or, c'est justement ce bord d'attaque qui est, en vol, la zone froide. Ceci a pour conséquences que d'une part, dans certains cas extrêmes le réchauffage peut s'avérer insuffisant, d'autre part ce système nécessite de toute façon une alimentation de puissance assez élevée, de l'ordre de 150 W, ce qui est toujours peu souhaitable pour des équipements embarqués.

Pour pallier ces défauts il est proposé selon l'invention un dispositif de réchauffage qui permet une meilleure répartition de la puissance calorifique nécessaire, tout en évitant l'emploi de thermostats de régulation en température peu fiables et encombrants (vu les dimensions de la girouette) et dont la puissance nécessaire pour assurer le dégivrage ou l'antigivrage est bien moindre, par exemple de l'ordre de 50 W, dans toutes les configurations possibles d'utilisation.

Un objet de la présente invention est de réaliser une sonde d'incidence où le réchauffage est produit en utilisant des céramiques à coefficient de température positif dites CTP ("positive coefficient température", PTC, en anglais) jouant le rôle d'un élément chauffant autorégulant.

3

Les céramiques CTP sont constituées de matériaux semi-conducteurs, à base de titanates de baryum en général (il existe aussi d'autres matériaux en matière plastique), qui sont mis en oeuvre comme des céramiques classiques. Ces semi-conducteurs sont à coefficient de température positif car leur résistivité augmente en fonction de leur température interne.

En fonctionnement, l'élément CTP est placé entre deux électrodes et est traversé par un courant ; ces électrodes peuvent être rapportées par différents procédés, tels que, par exemple, peintures conductrices déposées au pinceau ou par sérigraphie,...

Suivant l'épaisseur de céramique traversée par le courant d'alimentation, on obtient une courbe "résistance-température" fonction du mélange de base.

Leur principale caractéristique et intérêt est la variation de leur résistance en fonction de la température :

- à froid, celle-ci est de quelques ohms (suivant le type de céramique et l'épaisseur entre électrodes) ;

- quand la température augmente, la résistance augmente brutalement, le point où cette transition s'effectue étant appelé "point de curie".

La résistance maximale à chaud peut être de l'ordre de 10 000 à 10 000 000 fois la résistance à froid.

Les points de curie peuvent être compris entre -25°C et +250°C environ selon la composition.

Les courants d'alimentation peuvent être élevés.

Les céramiques CTP du fait de leur propriété trouvent application en tant qu'élément de compensation dans des circuits électriques pour compenser des effets de variation de température. Une utilisation fréquente est celle de thermostat statique pour remplacer un dispositif bilame.

Dans un dispositif capteur d'incidence conforme à l'invention, ces céramiques sont utilisées en tant qu'élément chauffant autorégulant. En effet, parce qu'une céramique CTP ajuste sa résistance, quand sa température varie, on peut dire qu'elle assure le contrôle

4

de sa température. De plus, l'augmentation, plus ou moins brutale, de la résistance limite automatiquement le courant à une valeur dépendant de la tension appliquée, en conséquence, la puissance dissipée : il s'agit donc effectivement d'une résistance chauffante autorégulante, donc utilisable directement sans thermostat.

Suivant l'invention le dégivrage est obtenu à l'aide d'une céramique à coefficient de température positif, placée entre deux électrodes pour recevoir un courant électrique d'alimentation et dont la forme est déterminée pour constituer la partie exposée à basse température et notamment les surfaces givrantes.

Les particularités et avantages de la présente invention apparaîtront dans la description qui suit, donnée à titre d'exemple non limitatif à l'aide des figures annexées qui représentent :

- figures 1 et 2, une courbe rappelant la variation de la résistance d'une céramique PCT en fonction de la température, et une courbe correspondante indiquant la variation du courant d'alimentation en fonction de la température ;

- figure 3, un schéma simplifié d'utilisation d'un dispositif de réchauffage correspondant ;

- figure 4, une autre représentation du dispositif de réchauffage logé dans une partie évidée d'un système à réchauffer ;

- figure 5, une autre représentation relative au dégivrage d'un système mobile ;

- figure 6, premier mode de réalisation d'une sonde d'incidence à girouette équipée d'un dégivrage selon l'invention ;

- les figures 7, 8, 9, d'autres modes de réalisation de la sonde avec son dispositif de dégivrage ;

- figures 10 à 13, des modes de réalisation possibles des électrodes pour constituer le dispositif de dégivrage dans les réalisations selon les figures 6 à 9.

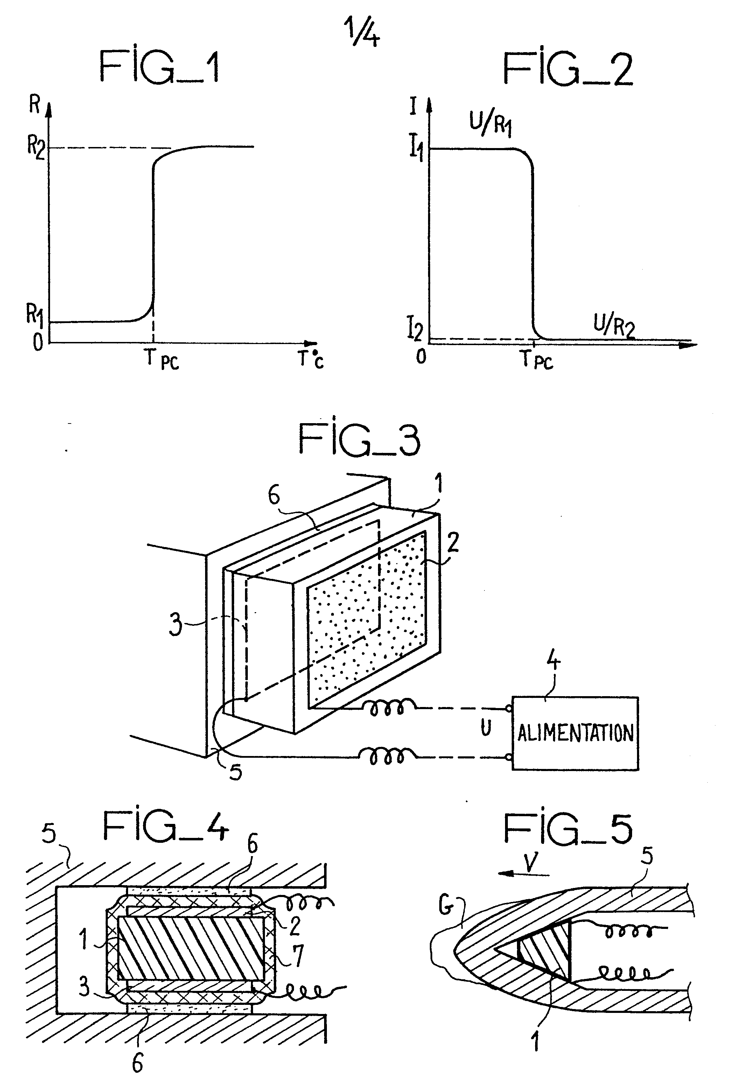

La figure 1 rappelle la caractéristique essentielle d'une céramique à constante de temps positive. La résistance de cette céramique présente une valeur R1 entre 0 et la température correspondant au point de curie $T_{PC}$. Pour cette valeur de température la résistance varie brutalement jusqu'à une valeur R2 beaucoup plus élevée qui reste ensuite sensiblement constante lorsque la température s'accroît. Alors que la résistance R1 peut s'exprimer en ohms, la résistance R2 s'exprimera généralement en mégohms.

La figure 2 représente la courbe correspondante du courant d'alimentation de la céramique. Ce courant représente une valeur I1 relativement importante entre 0 et le point de curie $T_{PC}$ et ensuite sa valeur tombe à une valeur I2 pratiquement nulle.

La figure 3 représente un dispositif de réchauffage composé d'une céramique PCT 1 placée entre deux électrodes 2 et 3 qui sont connectées à une source d'alimentation 4 qui fournit une tension U. La forme parallélipipédique dessinée pour la céramique ne doit pas être considérée comme limitative. La céramique en contact au moins par l'une de ses faces avec une surface correspondante d'une pièce ou d'un organe 5 à réchauffer. Le maintien peut s'effectuer par un matériau de collage 6.

La figure 4 représente le dispositif de réchauffage correspondant logé dans une alvéole de la pièce 5 à réchauffer. L'ensemble céramique et électrodes est revêtu d'une couche protectrice 7 qui fournit un bon isolement électrique et qui est suffisamment mince pour ne pas perturber la transmission thermique vers l'organe à réchauffer.

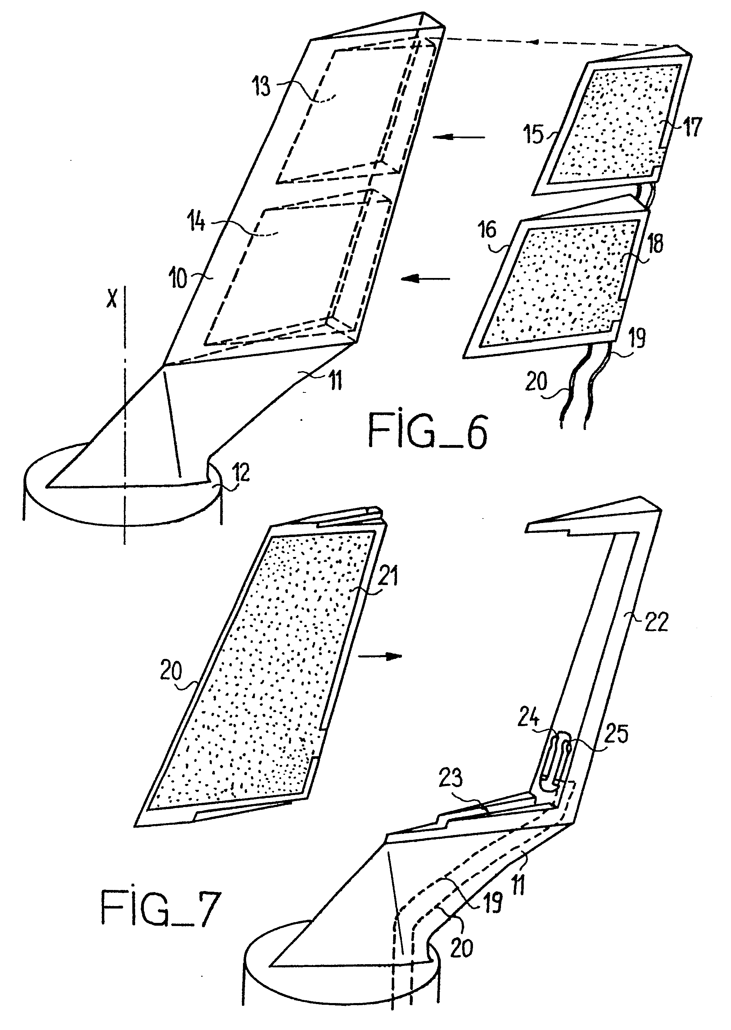

Sur la figure 5 on a considéré que la pièce 5 est une pièce mobile se déplaçant dans l'air et à une vitesse V et que, notamment dans le domaine aéronautique où l'évolution peut se faire à haute altitude, il peut y avoir formation de glaçons ou de givre G aux extrémités correspondantes de cette pièce. On a représenté une forme aérodynamique selon le sens de déplacement et une partie évidée qui reçoit le dispositif de réchauffage dont la céramique 1 présente une épaisseur variable qui répond mieux au problème de dégivrage posé en l'espèce.

Ce problème va maintenant être exposé pour un capteur d'incidence aérodynamique appelé aussi sonde d'incidence.

6

Sur la figure 6 se trouve représentée la girouette de la sonde incidence, cette girouette constituant évidemment l'élément extérieur à l'aéronef et sensible du point de vue des caractéristiques aérodynamiques. La girouette se présente comme une palette ciselée, mobile en rotation autour d'un axe X déterminé. Elle comporte une partie supérieure 10 appelée drapeau qui constitue un dièdre et qui s'oriente dans la direction d'écoulement des filets d'air par rapport à l'avion ; la partie inférieure 11 s'appelle le bras et est fixée à travers une embase 12 à des capteurs angulaires internes au fuselage de l'avion. Plusieurs conceptions du dispositif de dégivrage sont a priori envisageables les figures 6 à 13 en donnent quelques exemples de réalisation.

Dans la solution figure 6, la girouette est considérée moulée en alliage léger ou en un autre matériau thermiquement conducteur, de telle façon que lors du moulage il est possible de préserver aisément des logements 13 et 14 dans lesquels doivent venir s'insérer des modules céramiques 15 et 16, ces modules étant usinés à des cotes légèrement plus faibles que celles des logements destinés à les recevoir. En effet, la discontinuité du comportement électrique (voir figure 1 et figure 2) va de pair avec une discontinuité du comportement thermique ; il y a lieu donc d'assurer une certaine liberté à la céramique afin de tenir compte des variations de volume et ne pas créer de contraintes risquant de la faire éclater. Sur les éléments 15 et 16 sont déposés les électrodes 17, 18 et les fils d'alimentation 19 et 20 sont soudés, ou collés avec une colle conductrice. L'ensemble ainsi réalisé se trouve protégé et isolé électriquement par un revêtement approprié et d'épaisseur suffisamment faible pour ne pas perturber la conductibilité thermique. Ce revêtement pourra être un émail ou un vernis époxy par exemple. L'assemblage final se fait à l'aide d'une résine souple destinée à absorber les dilatations différentielles de tous les composants. Le revêtement isolant et la résine de collage ne sont pas représentés sur les figures à titre de simplification, ils correspondent aux éléments repérés 7 et 6 respectivement sur la figure 4.

7

Plutôt que de réaliser un ou plusieurs modules céramiques à insérer et à assembler dans le drapeau 10 de la girouette dont la forme est somme toute complexe, il est plus intéressant de réaliser le drapeau 10 presque entièrement au moyen de la céramique, que l'on vient par la suite fixer sur un support simple prémoulé en alliage léger ou en matériau synthétique.

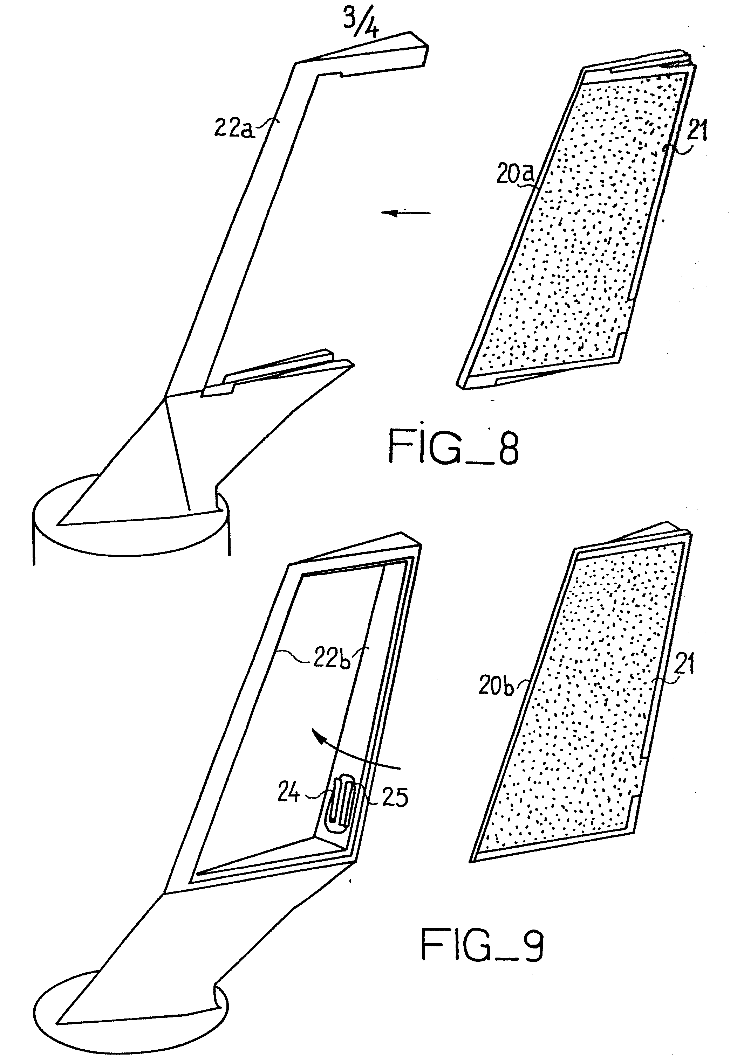

Les figures 7, 8 et 9 correspondent à des variantes d'un tel mode de réalisation. Le dispositif de dégivrage est constitué par un unique module 20 revêtu de ses électrodes telle 21 et qui forment la partie essentielle du drapeau, la partie restante constituant un support en alliage léger ou matériau synthétique pour le dispositif de réchauffage. La forme de ce support varie selon la forme donnée au drapeau. Dans le cadre de la figure 7, c'est la partie avant du drapeau qui est constituée par le module 20 et la partie arrière du drapeau 22 reliée au bras 11 qui constitue le support, cette partie peut être usinée sur les extrémités supérieures et inférieures avec des rainures telle que 23, pour permettre la mise en place du module 20 usiné de manière complémentaire. Ces rainures sont par exemple males sur le support, et femelles sur la partie céramique et elles permettent un bon centrage de l'élément 20 et un bon maintien latéral. Dans le cas de la figure 8, le support 22a est constitué par la partie avant du drapeau et le module 20a constitue la partie arrière. Dans ce cas de la figure 9, le support 22b constitue un encadrement du drapeau, une partie avant et une partie arrière, tandis que le module 20b de réchauffage constitue la partie restante.

L'assemblage final du module 20, 20a ou 20b, doit être réalisé comme précédemment à l'aide d'une résine souple absorbant les éventuelles dilatations différentielles.

Il est possible de supprimer la liaison des fils alimentation par soudure et d'effectuer celles-ci à l'aide d'un contact mécanique par pression, par des lames élastiques 24 et 25 comme représentées sur les figures 7 et 9. Enfin, il est nécessaire de protéger le drapeau et les électrodes qu'il porte par un revêtement mince, un vernis ou à la rigueur, une tôle fine épousant la forme de la girouette. Ce

8

revêtement à d'une part un rôle d'isolation électrique, d'autre part, un rôle de protection mécanique contre l'abrasion, l'usure, etc... Ce revêtement n'a pas été porté sur les figures.

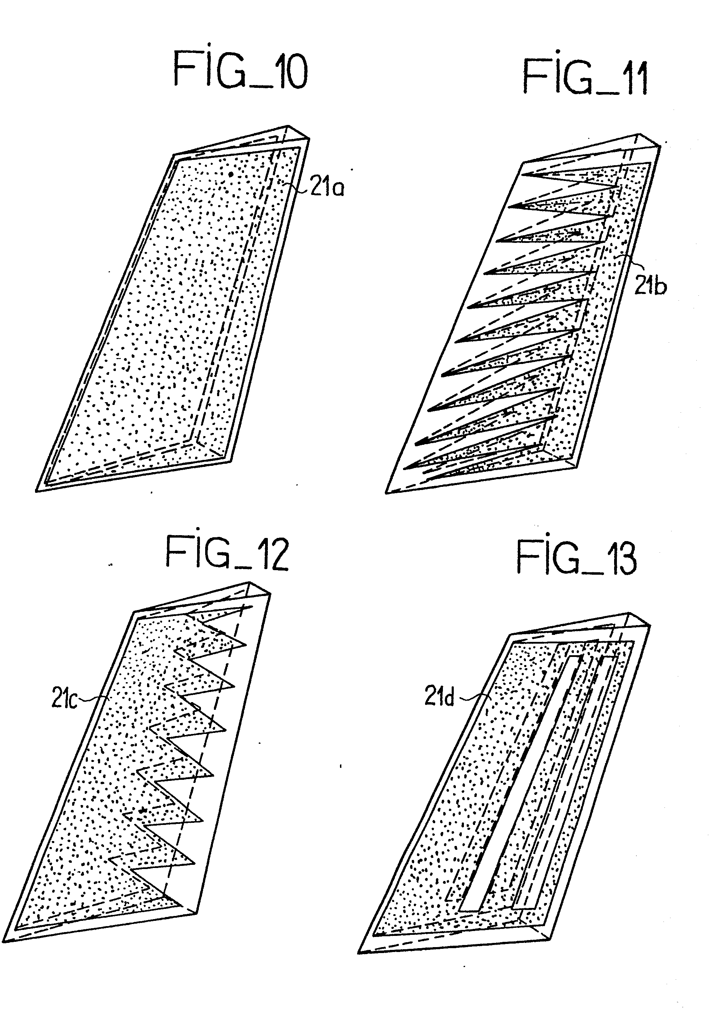

Les figures 10 à 13 se rapportent à la réalisation des électrodes. Ces électrodes sont dessinés de part et d'autre des éléments céramiques ou de l'élément céramique unique 20 considéré. En bout la céramique présente une épaisseur variable qui va croissant depuis l'arête du dièdre jusqu'à la partie arrière. En conséquence la résistance à froid présentée croît dans le même sens. Il convient dans certains cas de moduler les zones effectivement conductrices en adaptant le dessin des électrodes afin de mieux répartir la puissance calorifique, en particulier vers le bord d'attaque dans le cas concerné. Ainsi, dans le cas de la figure 10 le réchauffage produit avec le dessin de l'électrode 21a sera beaucoup plus important vers le bord d'attaque que vers l'arrière ; dans le concept selon la figure 11 le réchauffage est sensiblement constant quelle que soit l'épaisseur du milieu céramique moyennant un dessin de l'électrode 21b en forme de peigne. Dans le cas de la figure 12 cette disposition en peigne de l'électrode 21c se trouve inversée ce qui fait que c'est du côté du bord d'attaque que le réchauffage sera maximal et qu'il va décroître très vite vers la partie arrière. Un effet analogue sera produit dans le cas de la figure 13 par l'électrode 21d qui comporte des ouvertures vers l'arrière où ne se produit pas de réchauffage.

Les électrodes peuvent être des feuilles métalliques minces collées avec des colles conductrices, ou déposées au pinceau, par sérigraphie ou par un procédé photographique. La géométrie des électrodes est également liée aux caractéristiques de la céramique CTP utilisée, de manière à ce que la résistance au point de fonctionnement (point de curie) permettent de dissiper la puissance nécessaire. A titre indicatif, pour une puissance de 50 watts, la résistance sous 28 volts en courant continu sera de l'ordre 16 ohms, soit à 20°C une résistance 5 ohms environ. Le point de curie céramique sera choisi assez bas, de préférence au-dessous de 70° et par exemple dans une plage de 50 à 70°, afin de minimiser d'une

9

part, les pertes de puissance dans les conditions normales d'utilisation et éviter d'autre part, le danger de brûlure pour le personnel au sol.

Les céramiques à coefficient de température positif sont utilisées, conformément à l'invention, dans le domaine avionique en tant que élément chauffant autorégulateur pour l'antigivrage ou le dégivrage de divers capteurs tels que les sondes d'incidence comme il a été exposé et aussi, selon un autre exemple, des capteurs de pression dont les caractéristiques peuvent être perturbées par la présence de givre sur leurs sections d'entrée.

10

REVENDICATIONS

1. Dispositif exposé au moins partiellement dans une ambiante à basse température, équipé d'un dispositif de dégivrage pour assurer automatiquement le dégivrage des surfaces exposées par circulation d'un courant électrique dans la résistance présentée par le dispositif de dégivrage, caractérisé en ce que la partie exposée est constituée essentiellement par le dispositif de dégivrage qui a une forme correspondante et qui est réalisé à l'aide d'au moins un élément résistif (1) du type céramique à coefficient de température positif, dite CTP, placée entre deux électrodes (2, 3) pour recevoir ledit courant d'alimentation.

2. Dispositif selon la revendication 1, caractérisé en ce que le dispositif de dégivrage constitue également la majeure partie des surfaces à dégivrer.

3. Dispositif selon la revendication 2, caractérisé en ce que l'épaisseur de la céramique CTP entre les électrodes est variable et est déterminé conjointement avec le dessin des électrodes pour répartir et adapter la puissance calorifique délivrée en fonction des besoins de l'utilisation.

4. Dispositif selon la revendication 3, caractérisé en ce que la céramique CTP est déterminée avec un point de curie qui se situe assez bas pour réduire l'énergie dissipée et éviter le danger de brûlure pour l'exploitant.

5. Dispositif selon la revendication 4, caractérisé en ce que le point de curie est inférieur à 70°.

6. Dispositif selon la revendication 5, caractérisé en ce que le point de curie se situe dans la plage 50 à 70°C.

7. Dispositif selon l'une quelconque des revendications 3 à 6 et constituant une sonde d'incidence du type à girouette avec un drapeau en forme de dièdre, caractérisée en ce que le dispositif de réchauffage est constitué par au moins un module logé dans le drapeau (10) de la girouette.

11

8. Dispositif selon la revendication 7, caractérisée en ce que le drapeau comporte des logements (13, 14) pour recevoir les modules (15, 16) de réchauffage.

9. Dispositif selon la revendication 7, caractérisée en ce que le drapeau est constitué en majeure partie par un module de réchauffage (20, 20a, 20b).

10. Dispositif selon l'une quelconque des revendications 7 à 9, caractérisée en ce que le dessin des électrodes (21a, 21d) est déterminé pour produire une loi de variation déterminée du réchauffage entre le bord d'attaque et l'arrière du drapeau, compte tenu de l'épaisseur variable de la céramique.

11. Dispositif selon la revendication 10, caractérisé en ce que le dessin est en forme de peigne.

12. Dispositif selon la revendication 10 ou 11, caractérisé en ce que l'alimentation électrique s'effectue par l'intermédiaire de contacts à pression.

13. Dispositif selon l'une quelconque des revendications 10 à 12, caractérisé en ce que l'épaisseur de la céramique est progressivement croissante de l'arête du dièdre jusqu'à la partie arrière du drapeau.

# FIG_1

# FIG_2

# FIG_3

ALIMENTATION

# FIG_4

# FIG_5

FIG_6

FIG_7

3/4

22a

20a

21

FIG_8

22b

20b

21

24    25

FIG_9

4/4

FIG_10

FIG_11

21a

21b

FIG_12

FIG_13

21c

21d

**Office européen des brevets**

## RAPPORT DE RECHERCHE EUROPEENNE

EP 83 40 1512

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | EP-A-0 022 878 (BLECKMANN) <br><br> * Page 2, lignes 4-25; page 7, ligne 4 - page 8, ligne 12 * | 1,3,8, 12 | H 05 B 3/14 <br> G 01 P 13/02 <br> B 64 D 15/12 |
| A | DE-A-2 519 623 (KALISCHER) <br><br> * Page 6, dernier alinéa - page 8 * | 1,3,5, 6 | |
| A | FR-A-2 415 935 (RAYCHEM) <br> * Page 1 - page 2, alinéa 2 * | 1,6 | |
| A | FR-A-2 356 336 (LICENTIA) <br> * Page 3, lignes 6-22 * | 2 | |
| A | DE-A-3 104 608 (MENHARDT) | | |
| A | EP-A-0 026 457 (KLEINSCHMIDT) | | H 05 B <br> G 01 P <br> B 64 D |

**DOMAINES TECHNIQUES RECHERCHES (Int. Cl. 3)**

Le présent rapport de recherche a été établi pour toutes les revendications

| Lieu de la recherche | Date d'achèvement de la recherche | Examinateur |
|---|---|---|
| LA HAYE | 26-09-1983 | KERN H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82